# EUROPÄISCHE PATENTSCHRIFT

(11) **EP 3 791 075 B1**
(45) Veröffentlichungstag und Bekanntmachung des Hinweises auf die Patenterteilung: **04.05.2022**
(21) Anmeldenummer: 20726708.9
(22) Anmeldetag: 27.04.2020
(51) Int. Cl.: F16B 2/18, B62J 11/00, B62J 11/04, F16B 21/07, F16B 1/00

(54) **VERSCHLUSSVORRICHTUNG ZUM VERBINDEN VON ZWEI BAUGRUPPEN MITEINANDER**
CLOSURE DEVICE FOR CONNECTING TWO ASSEMBLIES TO ONE ANOTHER
DISPOSITIF DE FERMETURE SERVANT À RELIER DEUX MODULES L'UN À L'AUTRE

(30) Priorität: 26.04.2019 DE 102019206054
(43) Veröffentlichungstag der Anmeldung: 17.03.2021
(60) Teilanmeldung: 22150193.5
(73) Patentinhaber: Fidlock GmbH, 30659 Hannover (DE)
(72) Erfinder: FIEDLER, Joachim, 30519 Hannover (DE); BOTKUS, Breido, 30175 Hannover (DE); RICHTER, Friedemann, 30173 Hannover (DE); DIERSCHKE, Dennis, 30419 Hannover (DE)
(74) Vertreter: Maikowski & Ninnemann Patentanwälte Partnerschaft mbB
(86) Internationale Anmeldenummer: PCT/EP2020/061590
(87) Internationale Veröffentlichungsnummer: WO 2020/216955

(56) Entgegenhaltungen:
- WO-A1-2013/075851
- DE-A1-102014 213 383
- DE-A1-102016 216 422
- DE-B3-102010 044 144

## Beschreibung

Die Erfindung betrifft eine Verschlussvorrichtung zum Verbinden von zwei Baugruppen miteinander nach dem Oberbegriff des Anspruchs 1, insbesondere zum Verbinden eines Gegenstands mit einem Rahmen eines Fahrzeugs, z.B. eines Fahrrads.

Eine derartige Verschlussvorrichtung umfasst ein an einer der Baugruppen anzuordnendes, erstes Verschlussteil, das ein Sperrstück mit einem ersten Sperrabschnitt und ein erstes Magnetelement aufweist. Die Verschlussvorrichtung umfasst zudem ein an der anderen der Baugruppen zu befestigendes, zweites Verschlussteil, das eine Sperraufnahme mit einem zweiten Sperrabschnitt und ein zweites Magnetelement aufweist. Das erste Verschlussteil und das zweite Verschlussteil sind entlang einer Schließrichtung aneinander ansetzbar und sind in einer Schließstellung formschlüssig entgegen der Schließrichtung miteinander verbunden. Dies erfolgt dadurch, dass das Sperrstück des ersten Verschlussteils in der Sperraufnahme des zweiten Verschlussteils aufgenommen ist und der erste Sperrabschnitt des Sperrstücks formschlüssig mit dem zweiten Sperrabschnitt der Sperraufnahme in Eingriff steht.

Die Verschlussvorrichtung ist hierbei magnetisch ausgebildet, indem Magnetelemente der Verschlussteile magnetisch anziehend zusammenwirken und auf diese Weise das Ansetzen der Verschlussteile aneinander zum Schließen der Verschlussvorrichtung unterstützen.

Eine solche Verschlussvorrichtung kann beispielsweise zum Befestigen einer Baugruppe, wie zum Beispiel einer Trinkflasche oder einer Tasche, eines Fahrradschlosses oder eines anderen Gegenstands an dem Rahmen eines Fahrrads dienen.

Bei einem aus der WO 2012/151320 A9 bekannten Verschluss wird ein Klemmbügel an einem Rahmen befestigt und weist Magnetelemente auf, die zum Befestigen einer Trinkflasche an dem Rahmen mit einem magnetisch aktiven Ring der Trinkflasche zusammenwirken.

Zudem ist bekannt, Behälter in Form von Trinkflaschen rastend an einem Rahmen eines Fahrzeugs zu befestigen, wobei in diesem Zusammenhang auch in Erwägung gezogen worden ist, magnetische Elemente zum Sichern der Verbindung einzusetzen.

Generell soll eine Verschlussvorrichtung, mit der ein Gegenstand (beispielsweise eine Trinkflasche oder ein Fahrradschloss) an dem Rahmen eines Fahrzeugs (insbesondere eines Zweirads oder eines Dreirads) festgelegt werden kann, einfach zu bedienen sein. Der Gegenstand soll platzsparend an dem Fahrzeug untergebracht werden können, wobei beispielsweise in einer Rahmenöffnung eines Fahrradrahmens nur ein beschränkter Platz zur Verfügung steht. Die Verschlussvorrichtung soll in geöffneter Stellung einen geringen Bauraum sowohl an dem Fahrzeug als auch an dem Gegenstand aufweisen, damit die Verschlussteile der Verschlussvorrichtung nicht stören. Wünschenswert ist zudem, die Verschlussvorrichtung kostengünstig auszugestalten, wobei insbesondere auch in Betracht zu ziehen ist, dass z.B. Behälter in Form von Trinkflaschen nach begrenzter Benutzungsdauer ausgetauscht werden müssen.

Wünschenswert ist zudem, ein System einer Verschlussvorrichtung zu schaffen, bei dem ein erstes Verschlussteil flexibel zum Anbringen ganz unterschiedlicher Gegenstände zum Beispiel an einem Fahrrad verwendet werden kann. Ein einheitliches erstes Verschlussteil soll hierbei zum Beispiel dauerhaft an einem Fahrzeug befestigt sein und ein Anbringen von unterschiedlichen, mit einem zweiten Verschlussteil bestückten Gegenständen, zum Beispiel eines Behälters oder eines Fahrradschlosses, ermöglichen.

Die WO 2013/075851 A1 beschreibt eine Verschlussvorrichtung, bei der ein Federverriegelungselement an einem Schieber angeordnet ist. In einer Schließstellung der Verschlussvorrichtung greift ein Stecker in das Federverriegelungselement ein. Durch Verschieben des Schiebers kann das Federverriegelungselement von dem Stecker gelöst werden, sodass die Verschlussvorrichtung geöffnet werden kann.

Die DE 10 2014 213 383 A1 beschreibt eine manuell zu betätigende Verschlussvorrichtung mit zwei Verschlussteilen, die entlang einer Schließrichtung aneinander ansetzbar sind. Ein Sperrstück in Form eines Verrieglungselements eines Verschlussteils kann zu dem anderen Verschlussteil bewegt werden, um eine Verbindung zwischen den Verschlussteilen herzustellen.

Die DE 10 2010 044 144 B3 beschreibt eine Verschlussvorrichtung mit zwei Verschlussteilen, von denen eines ein Sperrstück und das andere ein Federverrieglungselement zum formschlüssigen Verbinden mit dem Sperrstück aufweist.

Aufgabe der vorliegenden Erfindung ist es, eine Verschlussvorrichtung bereitzustellen, die einfach handhabbar ist, ein zuverlässiges Befestigen zweier Baugruppen aneinander ermöglicht und zudem vielfältig und flexibel einsetzbar ist.

Diese Aufgabe wird durch eine Verschlussvorrichtung mit den Merkmalen des Anspruchs 1 gelöst.

Demnach weist die Verschlussvorrichtung einen an dem zweiten Verschlussteil angeordneten Verriegelungsmechanismus auf, der ein Verriegelungselement und einen mit dem Verriegelungselement wirkverbunden Betätigungsmechanismus aufweist. Das Verriegelungselement ist in der Schließstellung mit dem Sperrstück in Wirkverbindung bringbar, um den formschlüssigen Eingriff zwischen dem ersten Sperrabschnitt und dem zweiten Sperrabschnitt zu sperren, wobei der Betätigungsmechanismus betätigbar ist, um das Verriegelungselement relativ zu der Sperraufnahme zu verstellen, sodass der erste Sperrabschnitt und der zweite Sperrabschnitt voneinander lösbar sind.

Die Verschlussvorrichtung weist einen Verriegelungsmechanismus auf, der dazu dient, die formschlüssige Verbindung zwischen den Verschlussteilen in der Schließstellung derart zu verriegeln, dass die Verschlussteile nicht ohne weiteres voneinander abgenommen werden können, jedenfalls nicht ohne Lösen der Verriegelung. Zum Verriegeln weist der Verriegelungsmechanismus ein Verriegelungselement auf, das über einen Betätigungsmechanismus betätigbar ist und mittels des Betätigungsmechanismus in Wirkverbindung mit und außer Wirkverbindung von dem Sperrstück bringbar ist, um in der Schließstellung der Verschlussvorrichtung die formschlüssige Verbindung zwischen den Sperrabschnitten des Sperrstücks und der das Sperrstück aufnehmenden Sperraufnahme zu sperren oder das Sperrstück so freizugeben, dass die Verbindung zwischen den Verschlussteilen gelöst werden kann.

Die Sperrabschnitte können zum Beispiel starr an dem Sperrstück einerseits und an der Sperraufnahme andererseits geformt sein. Die Sperrabschnitte können beispielsweise nach Art von Hinterschnitten ausgebildet sein, sodass an dem Sperrstück ein Rastvorsprung zur Ausbildung eines Hinterschnitts angeordnet ist, der in der Schließstellung mit einem Sperrabschnitt in Form eines in den Bereich der Sperraufnahme vorspringenden Hinterschnitts an der Sperraufnahme in Eingriff steht.

Das Verriegelungselement ist mit dem Sperrstück in Wirkverbindung bringbar, sodass dadurch der Eingriff zwischen den Sperrabschnitten des Sperrstücks und der

Sperraufnahme gesperrt ist. Ist das Verriegelungselement in sperrender Anlage mit dem zugeordneten Sperrstück, kann der Sperrabschnitt des Sperrstücks nicht außer Eingriff von dem Sperrabschnitt der Sperraufnahme gebracht werden, sodass die formschlüssige Verbindung zwischen den Verschlussteilen verriegelt ist. Durch Betätigen des Betätigungsmechanismus kann das Verriegelungselement außer Anlage von dem Sperrstück gebracht werden, sodass der Eingriff zwischen den Sperrabschnitten aufgehoben werden kann und die Verschlussteile somit voneinander gelöst werden können.

Ein solcher Verriegelungsmechanismus kann einerseits ein leichtes Ansetzen der Verschlussteile aneinander ermöglichen, bei festem Halt der Verschlussteile aneinander in der Schließstellung. Durch Betätigung des Betätigungsmechanismus kann die Verbindung zwischen den Verschlussteilen in einfacher Weise aufgehoben werden, sodass die Verschlussteile komfortabel voneinander gelöst werden können.

In einer Ausgestaltung ist das Verriegelungselement in einer quer zur Schließrichtung erstreckten Ebene an dem zweiten Verschlussteil verstellbar. Das Verriegelungselement kann beispielsweise quer zur Schließrichtung linear verschiebbar an dem zweiten Verschlussteil geführt sein und über den Betätigungsmechanismus somit linear an dem zweiten Verschlussteil verschoben werden, um das Verriegelungselement in Wirkverbindung mit oder außer Wirkverbindung von dem Sperrstück des ersten Verschlussteils zu bringen. Alternativ kann das Verriegelungselement auch an dem zweiten Verschlussteil rotatorisch zu bewegen sein, beispielsweise indem das Verriegelungselement um eine entlang der Schließrichtung gerichtete Drehachse an dem zweiten Verschlussteil verdreht wird.

In einer Ausgestaltung weist der Betätigungsmechanismus ein Federelement auf, das ausgebildet ist, um das Verriegelungselement in der Schließstellung elastisch gegenüber dem Sperrstück vorzuspannen. Ein solches Federelement schafft eine Elastizität in dem Betätigungsmechanismus, die bewirkt, dass das Verriegelungselement unter elastischer Vorspannung in Anlage mit dem Sperrstück gebracht werden kann. Ein solches Federelement kann beispielsweise zwischen zwei Bauteilen des Betätigungsmechanismus, beispielsweise zwischen zwei Hebeln, angeordnet sein, um die Bauteile elastisch miteinander zu verbinden. Alternativ kann das Federelement auch zum Lagern eines Bauteils an dem zweiten Verschlussteil dienen, sodass der Betätigungsmechanismus über das Federelement elastisch an dem zweiten Verschlussteil abgestützt ist. Die Vorspannung in dem Formschluss bewirkt hierbei vorteilhaft, dass wechselnde Belastungen, insbesondere Vibrationen, denen ein Fahrrad auf unebenem Untergrund ausgesetzt ist, nicht zu einer Bewegung zwischen den beiden Verschlussteilen führt und einem damit einhergehenden Verschleiß der aufeinanderschlagenden Kontaktflächen der Verschlussteile somit vorgebeugt ist. Desweiteren kann die Vorspannung bewirken, dass Produktionstoleranzen und schon geringfügig verschlissene Kontaktflächen trotzdem zuverlässig ohne Spiel miteinander verbunden sind.

Der Betätigungsmechanismus kann ganz unterschiedlich ausgebildet sein.

So kann der Betätigungsmechanismus beispielsweise als Hebelmechanismus, zum Beispiel nach Art eines Kniehebels, ausgebildet sein.

In anderer Ausgestaltung kann der Betätigungsmechanismus einen Exzenter aufweisen, an dem das Verriegelungselement starr angeordnet oder mit dem das Verriegelungselement bewegbar verbunden ist. Ein solcher Exzenter kann beispielsweise eine Exzenterrolle oder einen Exzenterhebel verwirklichen.

Wiederum alternativ kann der Betätigungsmechanismus ein Schraubelement oder ein Keilelement aufweisen, über das das Verriegelungselement verstellbar ist.

Vorteilhaft ist hierbei, dass der Betätigungsmechanismus eine Selbsthemmung aufweist. Eine solche Selbsthemmung soll bewirken, dass bei einer Belastung an dem Verriegelungselement in sperrender Stellung des Verriegelungselements es nicht zu einem selbsttätigen Zurückstellen des Betätigungsmechanismus und somit zu einem Aufheben der Sperrwirkung an dem Sperrstück des ersten Verschlussteils kommt.

In einer Ausgestaltung weist der Betätigungsmechanismus ein Hebelelement auf, das zu dem zweiten Verschlussteil verschwenkbar ist, um das Verriegelungselement relativ zu der Sperraufnahme zu verstellen.

Ein solches Hebelelement kann beispielsweise verschwenkbar an einem mit dem zweiten Verschlussteil verbundenen Federelement gelagert sein, sodass das Hebelelement über das Federelement gelagert wird und über das Federelement an dem zweiten Verschlussteil abgestützt ist. Über das Federelement wird somit zum einen ein Verschwenken des Hebelelements ermöglicht, und zum zweiten ist die Gelenkachse, über die das Hebelelement an dem zweiten Verschlussteil abgestützt ist, elastisch zumindest geringfügig auslenkbar, sodass eine Elastizität für das Bereitstellen einer Vorspannung zwischen dem Verriegelungselement und dem Sperrstück in der sperrenden Stellung im Betätigungsmechanismus bereitgestellt wird.

Das Hebelelement kann beispielsweise einen Griff aufweisen, an dem ein Nutzer angreifen kann, um das Hebelelement zu verschwenken. Über das Hebelelement ist somit ein händisches Betätigen des Betätigungsmechanismus möglich.

Das Hebelelement kann, in einer Ausgestaltung, durch Wechselwirkung mit dem ersten Magnetelement und/oder dem zweiten Element magnetisch in einer der Schließstellung zugeordneten Hebelstellung gehalten werden, wenn sich die Verschlussvorrichtung in der Schließstellung befindet. Das Hebelelement ist somit in seiner sperrenden Stellung durch magnetische Wirkung zumindest eines der Magnetelemente arretiert, sodass ein unbeabsichtigtes Lösen der Verriegelung verhindert oder zumindest erschwert ist.

Der Betätigungsmechanismus kann beispielsweise einen Kniehebel verwirklichen. Hierzu kann beispielsweise ein Verbindungshebel an einer ersten Gelenkachse gelenkig mit dem Hebelelement und an einer zweiten Gelenkachse gelenkig mit dem Verriegelungselement verbunden sein. Das Hebelelement kann hierbei gelenkig an dem zweiten Verschlussteil gelagert sein, sodass über den Verbindungshebel und das Hebelelement ein Kniehebel verwirklicht wird, der zwischen einer sperrenden Stellung und einer gelösten Stellung verstellt werden kann. Überschreitet beim Verstellen des Kniehebels die erste Gelenkachse, an der das Federelement gelenkig mit dem Verbindungshebel verbunden ist, eine (gedachte) Linie zwischen der zweiten Gelenkachse, an der der Verbindungshebel mit dem Verriegelungselement verbunden ist, und einer dritten Gelenkachse, an der das Hebelelement an dem zweiten Verschlussteil gelagert ist, so kann ein solcher Kniehebel selbsthemmend sein, weil ein Verstellen zwischen der Sperrstellung und der Lösestellung nicht ohne weiteres durch Belastung an dem Verriegelungselement möglich ist.

In einer Ausgestaltung ist das zweite Verschlussteil lösbar mit einer zugeordneten Baugruppe, beispielsweise einem Behälter oder einem Fahrradschloss, verbindbar. Die Baugruppe kann hierbei so ausgestaltet sein, dass bei an das zweite Verschlussteil angesetzter Baugruppe das Hebelelement durch Wechselwirkung mit der Baugruppe in der der Schließstellung zugeordneten Hebelstellung gehalten wird. In diesem Fall erfolgt ein Sperren des Hebelelements in seiner Sperrstellung somit über die mit dem zweiten Verschlussteil verbundene Baugruppe.

In einer Ausgestaltung weist das Verriegelungselement einen mit dem Sperrabschnitt des Sperrstücks in Eingriff bringbaren Hinterschnitt auf. Das Verriegelungselement gelangt in einer sperrenden Stellung somit in formschlüssigen Eingriff mit dem Sperrabschnitt des Sperrstücks und stellt somit einen zusätzlichen Formschluss zur Verbindung der Verschlussteile miteinander her, wobei das Verriegelungselement darüber hinaus den formschlüssigen Eingriff der Sperrabschnitte der Sperraufnahmen und des Sperrstücks miteinander sperrt.

In anderer Ausgestaltung kann das Verriegelungselement ohne Hinterschnitt ausgebildet sein und entlang einer quer zur Schließrichtung gerichteten Richtung auf das Sperrstück drücken, sodass über das Verriegelungselement das Sperrstück in formschlüssigem Eingriff mit dem Sperrabschnitt der Sperraufnahme gehalten wird. In diesem Fall dient das Verriegelungselement somit ausschließlich zum Sperren des formschlüssigen Eingriffs der Sperrabschnitte des Sperrstücks und der Sperraufnahme miteinander.

Das erste Verschlussteil der Verschlussvorrichtung kann beispielsweise ein einzelnes Sperrstück aufweisen. Entsprechend kann auch das zweite Verschlussteil lediglich eine einzelne Sperraufnahme zur Verbindung mit dem Sperrstück des ersten Verschlussteils aufweisen.

In anderer Ausgestaltung weist das erste Verschlussteil jedoch zwei (oder mehr) Sperrstücke auf, die quer zur Schließrichtung zueinander versetzt an einem Körper des ersten Verschlussteils geformt sind. Die Sperrstücke können zum Beispiel als starre Elemente nach Art von Zapfen an dem Körper des ersten Verschlussteils ausgebildet sein und verwirklichen somit Male-Teile, die in Female-Teile verwirklichende Sperraufnahmen an dem zweiten Verschlussteil eingesetzt werden können, um die Verschlussteile miteinander zu verbinden.

Weist das erste Verschlussteil zwei (oder mehr) Sperrstücke auf, so weist ein jedes Sperrstück einen Sperrabschnitt auf, der in der Schließstellung der Verschlussvorrichtung mit einem zugeordneten Sperrabschnitt an einer Sperraufnahme des zweiten Verschlussteils formschlüssig in Eingriff steht.

Der Verriegelungsmechanismus kann in diesem Fall beispielsweise für jedes Sperrstück ein Verriegelungselement aufweisen, sodass über die Verriegelungselemente die Sperrstücke in den zugeordneten Sperraufnahmen gesperrt werden können.

In anderer Ausgestaltung kann der Verriegelungsmechanismus demgegenüber ein (einzelnes) Verriegelungselement aufweisen, das ein Sperren von mehreren Sperrstücken in den zugeordneten Sperraufnahmen bewirkt. Das Verriegelungselement kann hierzu auf ein Sperrstück einwirken, indem das Verriegelungselement mit dem zugeordneten Sperrstück in Anlage gebracht wird, um dadurch das Sperrstück in der zugeordneten Sperraufnahme zu arretieren. Durch Arretieren des Sperrstücks in der zugeordneten Sperraufnahme können auch ein oder mehrere weitere Sperrstücke, die starr mit jenem Sperrstück verbunden sind, in den jeweils zugeordneten Sperraufnahmen arretiert werden, sodass durch ein einziges Verriegelungselement ein Sperren von mehreren Sperrstücken in den zugeordneten Sperraufnahmen erfolgen kann.

Eine Verschlussvorrichtung der vorangehend beschriebenen Art kann z.B. an einem Fahrrad verwendet werden, wobei ein solches Fahrrad durch menschliche Pedalkraft oder auch elektrisch angetrieben sein kann. Eine Verschlussvorrichtung der hier beschriebenen Art kann grundsätzlich aber zum Verbinden zweier ganz beliebiger Baugruppen miteinander verwendet werden.

Der der Erfindung zugrunde liegende Gedanke soll nachfolgend anhand des in den Figuren dargestellten Ausführungsbeispiels näher erläutert werden. Es zeigen:
- Fig. 1: eine schematische Ansicht eines Fahrzeugs in Form eines Fahrrads;
- Fig. 2: eine Ansicht eines Ausführungsbeispiels einer Verschlussvorrichtung mit einem ersten Verschlussteil und einem zweiten Verschlussteil;
- Fig. 3: eine Seitenansicht der Verschlussvorrichtung gemäß Fig. 2;
- Fig. 4: eine andere perspektivische Ansicht der Verschlussvorrichtung gemäß Fig. 2;
- Fig. 5A,: eine Ansicht eines Ausführungsbeispiels einer Verschlussvorrichtung, in einer Schließstellung, bei mit einem zweiten Verschlussteil verbundenem Gegenstand;
- Fig. 5B: eine Draufsicht auf die Verschlussvorrichtung;
- Fig. 5C: eine Schnittansicht entlang der Linie A-A gemäß Fig. 5C;
- Fig. 6A: eine Ansicht der Verschlussvorrichtung, ohne einen mit dem zweiten Verschlussteil verbundenen Gegenstand;
- Fig. 6B: eine Draufsicht auf die Verschlussvorrichtung;
- Fig. 6C: eine Schnittansicht entlang der Linie A-A gemäß Fig. 6B;
- Fig. 7A: eine Ansicht der Verschlussvorrichtung beim Öffnen;
- Fig. 7B: eine Draufsicht auf die Verschlussvorrichtung;
- Fig. 7C: eine Schnittansicht entlang der Linie A-A gemäß Fig. 7B;
- Fig. 8A: eine Ansicht der Verschlussvorrichtung beim weiteren Öffnen;
- Fig. 8B: eine Draufsicht auf die Verschlussvorrichtung;
- Fig. 8C: eine Schnittansicht entlang der Linie A-A gemäß Fig. 8B;
- Fig. 9A: eine Ansicht der Verschlussvorrichtung beim weiteren Öffnen;
- Fig. 9B: eine Draufsicht auf die Verschlussvorrichtung;
- Fig. 9C: eine Schnittansicht entlang der Linie A-A gemäß Fig. 9B;
- Fig. 10A: eine Ansicht der Verschlussvorrichtung beim weiteren Öffnen;
- Fig. 10B: eine Draufsicht auf die Verschlussvorrichtung;
- Fig. 10C: eine Schnittansicht entlang der Linie A-A gemäß Fig. 10B;
- Fig. 11A: eine Ansicht der Verschlussvorrichtung beim Lösen der Verschlussteile voneinander;
- Fig. 11B: eine Draufsicht auf die Verschlussvorrichtung;
- Fig. 11C: eine Schnittansicht entlang der Linie A-A gemäß Fig. 11B;
- Fig. 12: eine Ansicht eines anderen Ausführungsbeispiels einer Verschlussvorrichtung, in einer Schließstellung der Verschlussteile bei mit einem der Verschlussteile verbundenem Gegenstand;
- Fig. 13: eine Ansicht der Verschlussvorrichtung, ohne den Gegenstand;
- Fig. 14: eine Ansicht der Verschlussvorrichtung beim Öffnen;
- Fig. 15: eine Ansicht der Verschlussvorrichtung beim weiteren Öffnen; und
- Fig. 16: eine Ansicht der Verschlussvorrichtung beim Lösen der Verschlussteile voneinander.

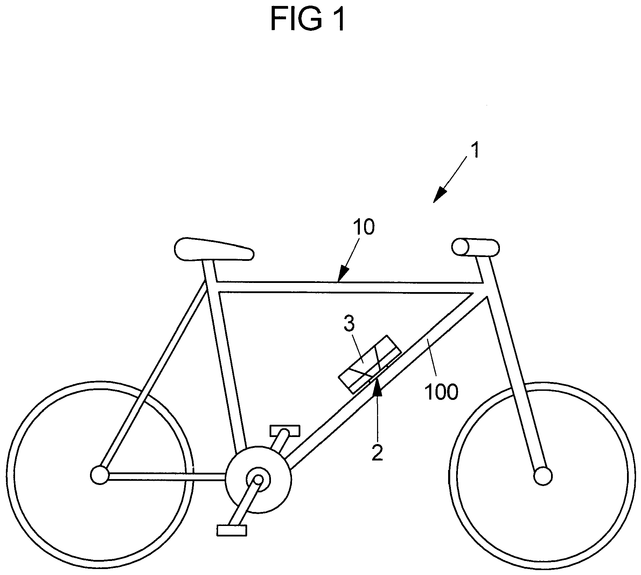

Fig. 1 zeigt in einer schematischen Ansicht ein Fahrzeug 1 in Form eines Fahrrads, das einen Rahmen 10 mit einer Rahmenstange 100 aufweist, an die über eine Verschlussvorrichtung 2 eine Baugruppe 3, beispielsweise in Form einer Trinkflasche, einer Trinkflaschenhalterung, einer Fahrradschlosshalterung oder eines anderen Behälters, z.B. einer Tasche, angesetzt ist.

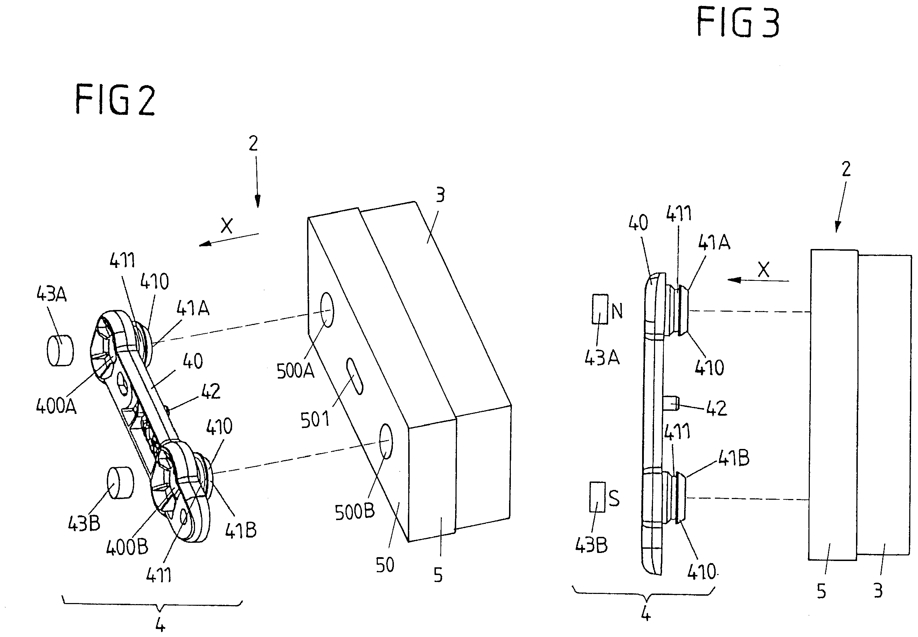

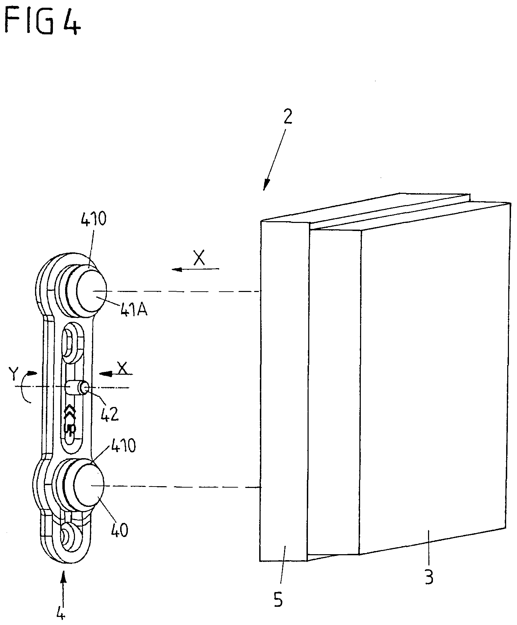

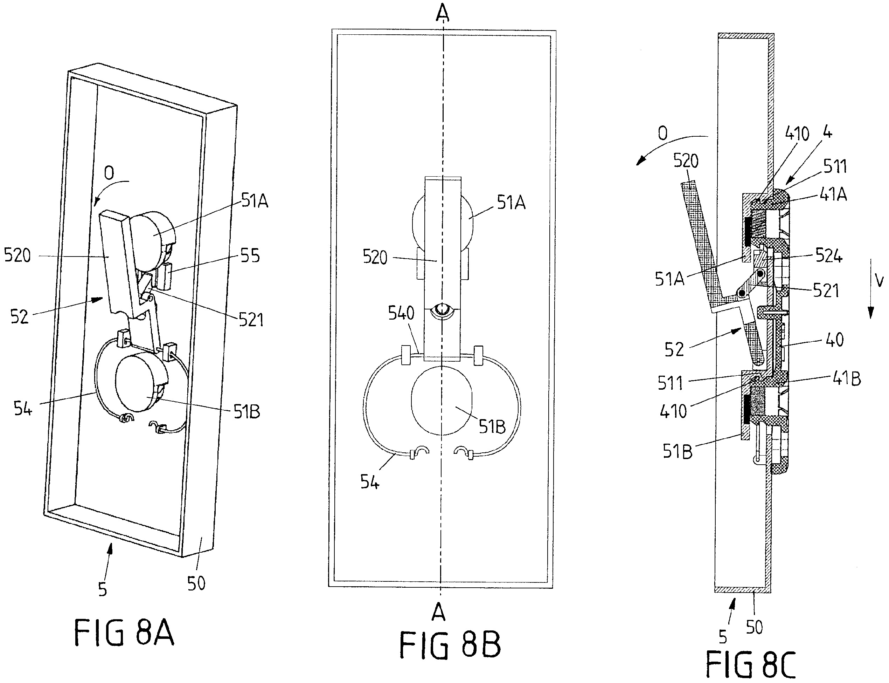

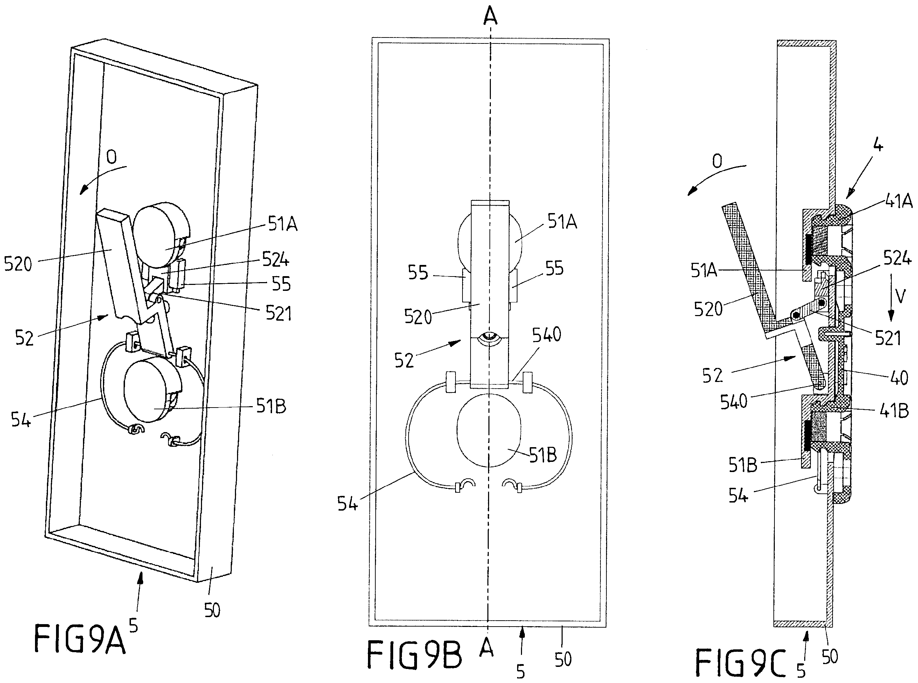

Fig. 2 bis 11A-11C zeigen ein Ausführungsbeispiel einer Verschlussvorrichtung 2, die zum Verbinden einer Baugruppe 3, zum Beispiel eines Behälters 3 oder eines Fahrradschlosses, mit dem Rahmen 10 eines Fahrzeugs 1 dient. Die Verschlussvorrichtung 2 weist ein erstes Verschlussteil 4 auf, das fest mit einer Rahmenstange 100 des Rahmens 10 des Fahrzeugs 1 zu verbinden, beispielsweise zu verschrauben ist. An das erste Verschlussteil 4 kann ein zweites Verschlussteil 5 angesetzt werden, das mit der Baugruppe 3 zu verbinden ist.

Das erste Verschlussteil 4 weist einen Körper 40 auf, von dem zwei Sperrstücke 41A, 41B vorstehen. Die Sperrstücke 41A, 41B weisen jeweils einen Schaft 411 auf, an dessen vom Körper 40 abliegendem Ende ein Sperrabschnitt 410 in Form eines Rastvorsprungs nach Art eines Hinterschnitts ausgebildet ist, der um den Schaft 411 umläuft und dabei radial von dem Schaft 411 nach außen hin vorsteht.

Die Sperrstücke 41A, 41B weisen - in diesem Ausführungsbeispiel zylindrische - axial zu den Sperrabschnitten 410 beabstandete Anlageflächen zur Anlage an zugeordneten Anlageflächen der Sperraufnahmen 51A, 51B auf.

An der von den Sperrstücken 41A, 41B abgewandten Seite weist der Körper 40 Aufnahmeöffnungen 400A, 400B am Orte der Sperrstücke 41A, 41B auf, in die Magnetelemente 43A, 43B eingesetzt und fest mit dem Körper 40 verbunden sind.

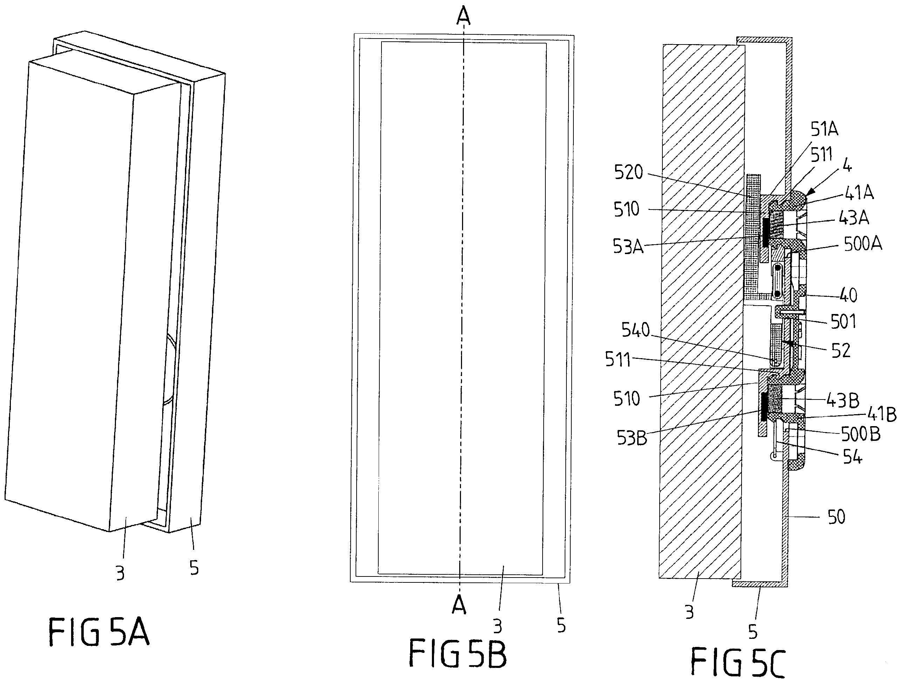

Das zweite Verschlussteil 5 weist einen Körper 50 auf, in dem zwei Verschlussöffnungen 500A, 500B gebildet sind, in die das erste Verschlussteil 4 mit den Sperrstücken 41A, 41B entlang einer Schließrichtung X einsetzbar ist, um die Verschlussrichtung 2 zu schließen und die Verschlussteile 4, 5 miteinander zu verbinden. An dem Körper 40 des ersten Verschlussteils 4 ist ein Zapfen 42 geformt, der mittig zwischen den Sperrstücken 41A, 41B angeordnet ist und bei Verbinden der Verschlussteile 4, 5 miteinander mit einer Öffnung 501 am Körper 50 des zweiten Verschlussteils 5 in Eingriff gelangt, wie dies zum Beispiel aus Fig. 2 in Zusammenschau mit Fig. 5A-5C ersichtlich ist.

Im vorliegenden Beispiel ist die Öffnung 501 langloch-förmig zur verschieblichen Aufnahme des Zapfens 42. Der Zapfen 42 ist hierbei so weit in der Öffnug 501 verschieblich, dass die Sperrabschnitte 410 der Sperrstücke 41A, 41B sich aus einer Schließstellung, in der die Sperrabschnitte 410, 511 miteinander in Eingriff sind, außer Eingriff von den Sperrabschnitten 511 der Sperraufnahmen 51A, 51B bewegbar sind.

In einer alternativen Ausführungsform kann die Öffnung 501 auch eine runde Form zur in alle Richtungen eng tolerierten Aufnahme des Zapfens 42 haben. Die Sperrabschnitte 511 sind in diesem Fall so angeordnet, dass sie mittels Rotation der Verschlussteile zueinander um den Zapfen 42 außer Eingriff bringbar sind. In diesem Fall kann über die Öffnung 501 und den Zapfen 42 eine Drehlagerung zwischen den Verschlussteilen 4, 5 geschaffen werden.

Wie aus der Schnittansicht gemäß Fig. 5C ersichtlich ist, weist das zweite Verschlussteil 5 Sperraufnahmen 51A, 51B auf, in die die Sperrstücke 41A, 41B des ersten Verschlussteils 4 zum Schließen der Verschlussvorrichtung 2 einsetzbar sind. Die Sperraufnahmen 51A, 51B sind in die Schließrichtung X durch Wandungen 510 begrenzt, an denen Magnetelemente 53A, 53B angeordnet sind, die beim Verbinden der Verschlussteile 4, 5 miteinander magnetisch anziehend mit den Magnetelementen 43A, 43B an den Sperrstücken 41A, 41B des ersten Verschlussteils 4 zusammenwirken, sodass das Ansetzen der Verschlussteile 4, 5 aneinander magnetisch unterstützt wird.

Die Magnetelemente 43A, 43B, 53A, 53B können jeweils als Permanentmagnete ausgebildet sein und weisen in diesem Fall mit ungleichnamigen Polen aufeinander zu, sodass eine magnetische Anziehungskraft zwischen den Verschlussteilen 4, 5 besteht. Alternativ ist auch denkbar, dass die Magnetelemente 43A, 43B, 53A, 53B an einem der Verschlussteile 4, 5 als Permanentmagnete und die Magnetelemente 53A, 53B, 43A, 43B an dem anderen der Verschlussteile 5, 4 als magnetische Anker aus einem ferromagnetischen Material ausgebildet sind.

Die Magnetelemente 43A, 43B, 53A, 53B der Verschlussteile bewirken eine Vorpositionierung derart, dass die Sperrabschnitte 410, 511 zum Beispiel ohne Kollision miteinander in die Schließstellung gebracht werden können. Sind die Magnetelemente 43A, 43B, 53A, 53B als Permanentmagnete ausgebildet und sind sie in der Schließstellung in Gegenüberlage zueinander ausgerichtet, bewirkt die magnetische Anziehung zudem das In-Eingriff-Bringen der Sperrabschnitte 410, 511.

Bei dem dargestellten Ausführungsbeispiel sind an den Sperraufnahmen 51A, 51B Sperrabschnitte 511 in Form von quer zur Schließrichtung X nach innen vorspringenden Hinterschnitten geformt, mit denen die Sperrabschnitte 410 der Sperrstücke 41A, 41B in der Schließstellung der Verschlussvorrichtung 2 formschlüssig in Eingriff stehen, sodass die Verschlussteile 4, 5 mechanisch miteinander verbunden sind.

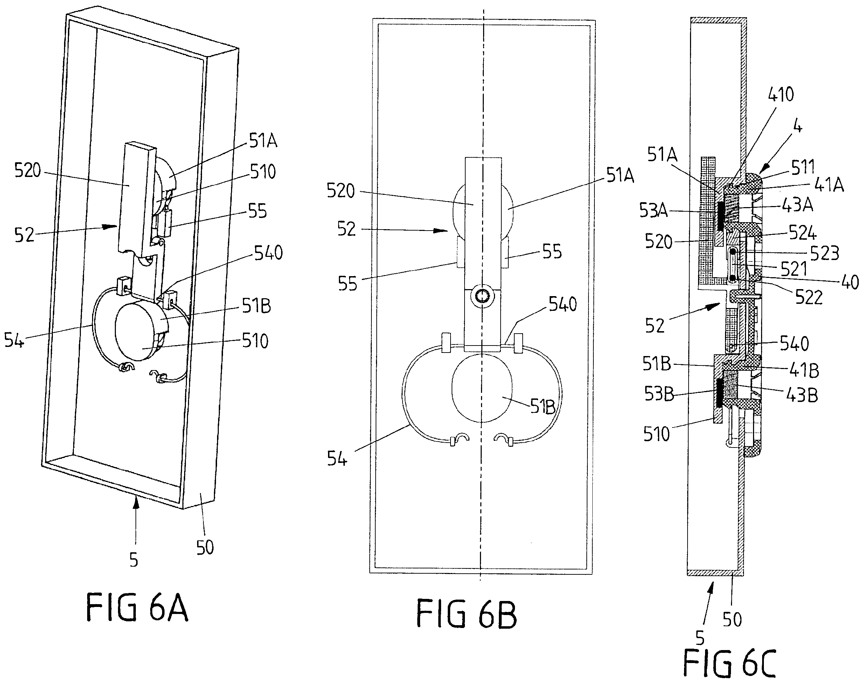

Am zweiten Verschlussteil 5 ist ein Verriegelungsmechanismus 52 angeordnet, der dazu dient, den Eingriff der Sperrstücke 41A, 41B mit den Sperraufnahmen 51A, 51B in der Schließstellung derart zu verriegeln, dass der formschlüssige Eingriff zwischen den Sperrabschnitten 410 an den Sperrstücken 41A, 41B und den Sperrabschnitten 511 an den Sperraufnahmen 51A, 51B gesperrt ist, wie dies aus Fig. 5C und 6C ersichtlich ist.

Der Verriegelungsmechanismus 52 weist, bei dem dargestellten Ausführungsbeispiel, ein Hebelelement 520 auf, das über ein Federelement 54 verschwenkbar an dem Körper 50 des zweiten Verschlussteils 5 gelagert ist. Das Federelement 54 bildet hierzu einen Lagerabschnitt 540 aus, der elastisch verformbar ist und an dem das Hebelelement 520 verschwenkbar angeordnet ist, wie dies insbesondere aus Fig. 6A ersichtlich ist.

Das Hebelelement 520 ist an einer ersten Gelenkachse 522 mit einem Verbindungshebel 521 gelenkig verbunden, wie dies aus Fig. 6C ersichtlich ist. Der Verbindungshebel 521 steht über eine zweite Gelenkachse 523 an einem der ersten Gelenkachse 522 abgewandten Ende mit einem Verrieglungselement 524 in gelenkiger Verbindung. Das Verriegelungselement 524 ist zwischen Führungselementen 55 linear verschiebbar an dem Körper 50 des zweiten Verschlussteils 5 geführt und kann durch Verstellen des Hebelelements 520 in Eingriff und außer Eingriff mit dem in Fig. 6C oben dargestellten Sperrstück 41A gebracht werden.

Der Verriegelungsmechanismus 52 dient dazu, die Sperrstücke 41A, 41B, gemeinsam in den zugeordneten Sperraufnahmen 51A, 51B zu verriegeln, sodass die Verbindung zwischen den Verschlussteilen 4, 5 mechanisch arretiert ist. In einer sperrenden Stellung greift das Verriegelungselement 524 hierbei mit einem daran geformten Hinterschnitt in den Sperrabschnitt 410 des zugeordneten Sperrstücks 41A ein, sodass über das Verriegelungselement 524 das Sperrstück 41A in formschlüssigen Eingriff mit dem Sperrabschnitt 511 der zugeordneten Sperraufnahme 51A gedrückt wird, wie dies aus Fig. 6C ersichtlich ist.

Die Anlage des Verriegelungselements 524 an dem Sperrstück 41A wird über das Hebelelement 520, das zusammen mit dem Verbindungshebel 521 einen Kniehebel verwirklicht, bewirkt und erfolgt unter elastischer Vorspannung dadurch, dass das Hebelelement 520 über das Federelement 54 und den Lagerabschnitt 540 elastisch gegenüber dem Körper 50 des zweiten Verschlussteils 5 abgestützt ist.

Weil das Hebelelement 520 gemeinsam mit dem Verbindungshebel 521 einen Kniehebel verwirklicht, ist die Arretierung des Sperrstücks 41A in der Sperraufnahme 51A selbsthemmend, weil eine Belastung an dem Verriegelungselement 524 nicht zu einem selbsttätigen Lösen des Verriegelungsmechanismus 52 führen kann, bedingt dadurch, dass die Gelenkachse 522 zum Lösen des Verriegelungsmechanismus 52 eine gedachte Linie (im Querschnitt gemäß Fig. 6C) zwischen der Gelenkachse 523 und dem Lagerabschnitt 540 zu überschreiten hat, was nicht ohne Kraftwirkung auf das Hebelelement 520 möglich ist.

Die Stellung des Hebelelements 520 kann in der gesperrten Stellung magnetisch arretiert sein, indem das Hebelelement 520 beispielsweise aus einem magnetischen Material, zum Beispiel einem ferromagnetischen Material, gefertigt ist und mit den Magnetelementen 43A, 53A zusammenwirkt und dadurch magnetisch in der Sperrstellung gemäß Fig. 6C gehalten ist.

Zusätzlich oder alternativ kann das Hebelelement 520 auch bei angesetzter Baugruppe 3 durch die Baugruppe 3 in der Sperrstellung arretiert sein, sodass bei an das Verschlussteil 5 angesetzter Baugruppe 3 das Hebelelement 520 nicht betätigbar ist.

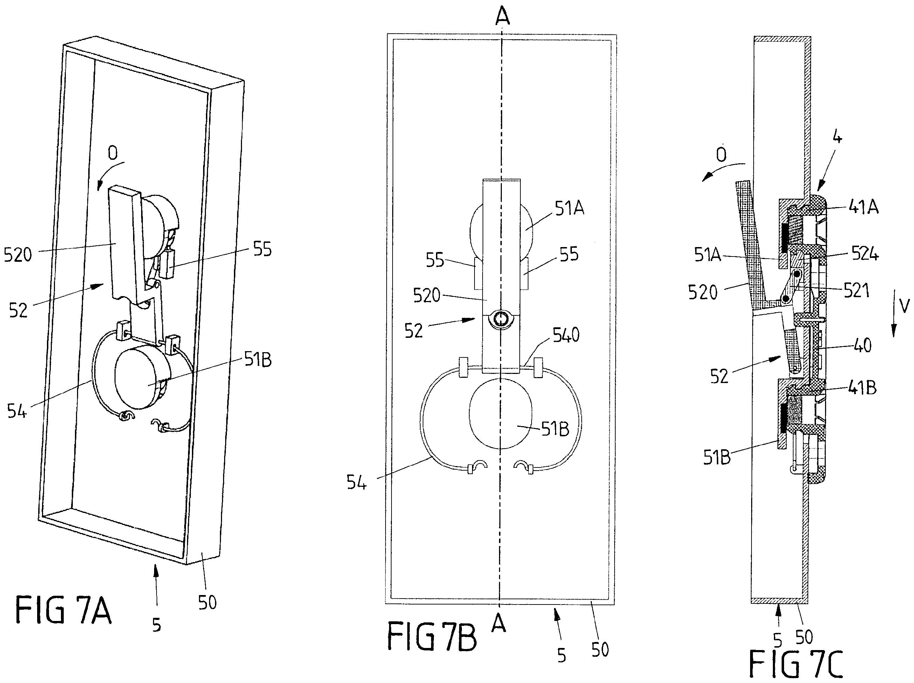

Zum Lösen des zweiten Verschlussteils 5 von dem ersten Verschlussteil 4 kann das Hebelelement 520 in eine Öffnungsrichtung O zu dem zweiten Verschlussteil 5 verschwenkt werden, wie dies aus Fig. 7A-7C, Fig. 8A-8C und Fig. 9A-9C ersichtlich ist. Durch Verschwenken des Hebelelements 520 wird das Verriegelungselement 524 in eine Verstellrichtung V quer zur Schließrichtung X von dem zugeordneten Sperrstück 41A entfernt, sodass die Sperrung des Sperrstücks 41A in der Sperraufnahme 51A aufgehoben wird.

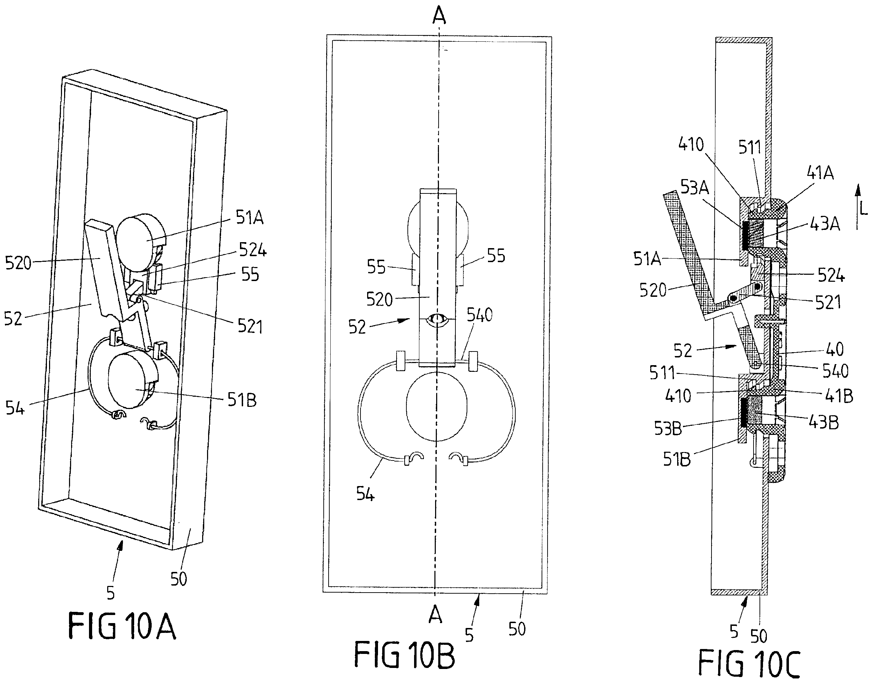

Ist die Sperrung aufgehoben, kann das zweite Verschlussteil 5, wie in Fig. 10A-10C dargestellt, in eine Löserichtung L, relativ zu dem ersten Verschlussteil 4 verstellt werden, sodass der Eingriff zwischen den Sperrabschnitten 410, 511 der Sperrstücke 41A, 41B und der Sperraufnahmen 51A, 51B aufgehoben wird. Die Löserichtung L ist hierbei der Verstellrichtung V entgegengesetzt und quer zur Schließrichtung X gerichtet.

Das Bewegen der Verschlussteile 4, 5 zueinander in die Löserichtung L wird hierbei durch einen Versatz der Magnetelemente 43A, 43B, 53A, 53B quer zur Schließrichtung X magnetisch unterstützt.

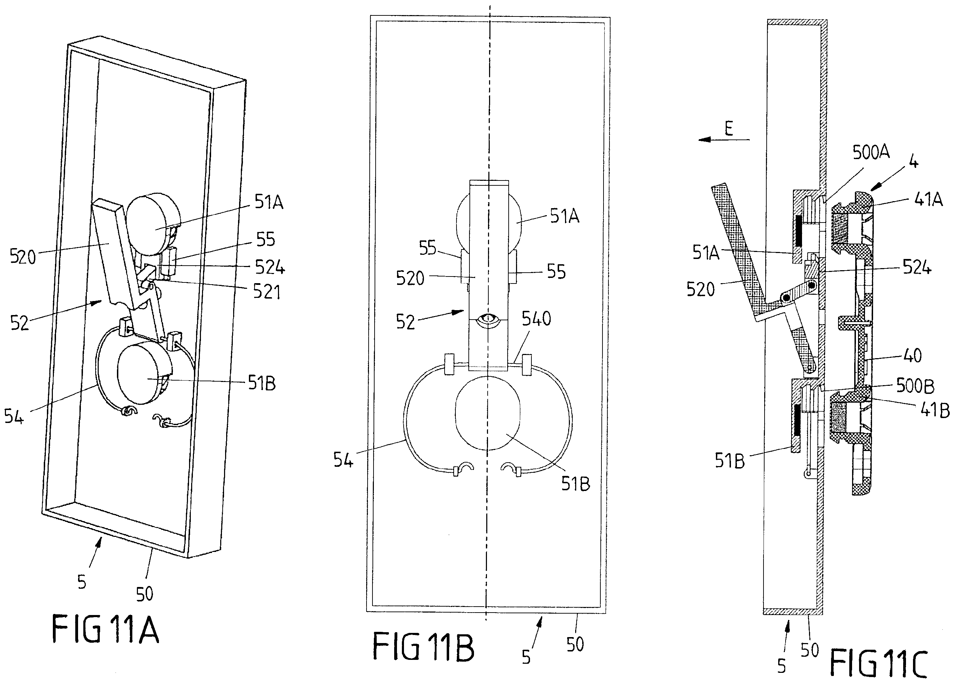

Ist der formschlüssige Eingriff zwischen den Sperrabschnitten 410, 511 aufgehoben, können die Verschlussteile 4, 5 entlang einer Trennrichtung E voneinander entnommen werden, wie dies in Fig. 11A-11C dargestellt ist.

Bei dem dargestellten Ausführungsbeispiel werden die Sperrstücke 41A, 41B, die über den Körper 40 starr miteinander verbunden sind, über ein einziges Verriegelungselement 524 gemeinsam in den zugeordneten Sperraufnahmen 51A, 51B gesperrt. Das Verriegelungselement 524 wirkt hierbei ausschließlich auf eines der Sperrstücke 41A, 41B ein und sperrt dieses in der zugeordneten Sperraufnahme 51A. Aufgrund der starren Verbindung der Sperrstücke 41A, 41B über den Körper 40 miteinander wird dadurch auch das andere Sperrstück 41B in der zugeordneten Sperraufnahme 51B arretiert.

Bei dem vorangehend beschriebenen Ausführungsbeispiel weist das Verriegelungselement 524 einen Hinterschnitt auf und steht somit formschlüssig mit dem Sperrabschnitt 410 des zugeordneten Sperrstücks 41A in Eingriff, wenn das Verschlussteil 4 in der Schließstellung gesperrt ist, wie dies aus Fig. 5A-5C und 6A-6C ersichtlich ist.

Denkbar ist hierbei auch, das Verriegelungselement 524 ohne Hinterschnitt auszubilden, sodass das Verriegelungselement 524 lediglich drückend quer zur Schließrichtung X auf das zugeordnete Sperrstück 41A einwirkt und dieses somit in Eingriff mit dem zugeordneten Sperrabschnitt 511 der Sperraufnahme 51A drückt und dadurch in der Sperraufnahme 51A sperrt.

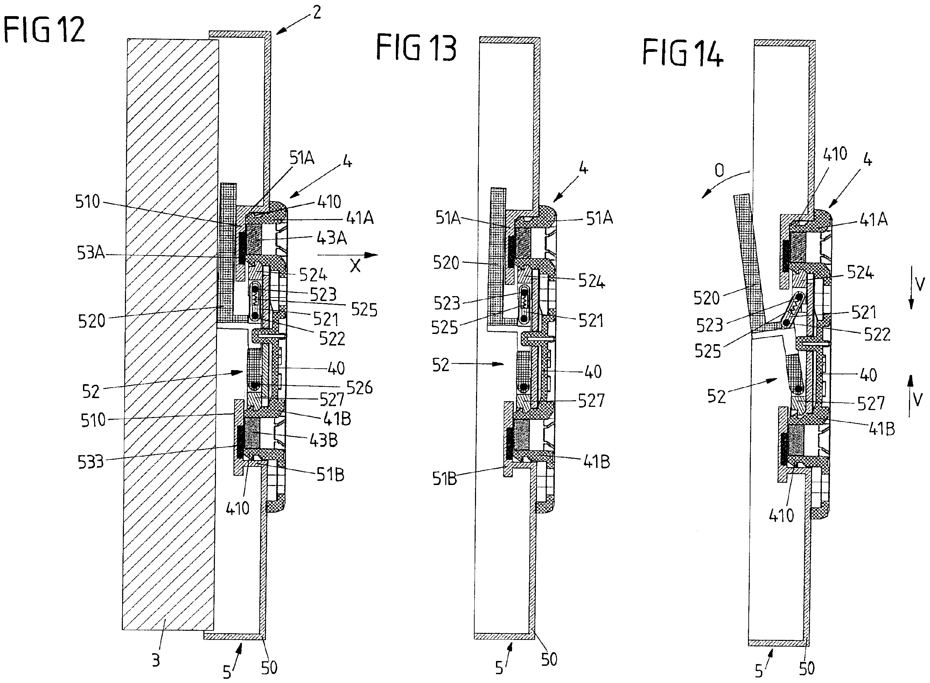

Bei einem anderen, in Fig. 12 bis 16 dargestellten Ausführungsbeispiel weisen die Sperraufnahmen 51A, 51B keine Sperrabschnitte auf, sondern verwirklichen im Wesentlichen zylindrische Führungen, in die die Sperrstücke 41A, 41B des Verschlussteils 4 entlang der Schließrichtung X einsetzbar sind. Die Sperrstücke 41A, 41B und die Sperraufnahmen 51A, 51B weisen hierbei jeweils, wie vorangehend beschrieben, Magnetelemente 43A, 43B, 53A, 53B auf, die das Ansetzen der Verschlussteile 4, 5 entlang der Schließrichtung X magnetisch unterstützen.

Bei dem in Fig. 12 bis 16 dargestellten Ausführungsbeispiel weist der Verriegelungsmechanismus 52 zwei Verriegelungselemente 524, 527 auf, die jeweils einem der Sperrstücke 41A, 41B zugeordnet und durch einen Betätigungsmechanismus relativ zu den Sperraufnahmen 51A, 51B linear verschiebbar sind. Die Verriegelungselemente 524, 527 weisen jeweils einen Hinterschnitt auf und stehen in der Schließstellung gemäß Fig. 12 und 13 formschlüssig mit den Sperrabschnitten 410 der Sperrstücke 41A, 41B des Verschlussteils 4 in Eingriff, sodass darüber eine formschlüssige Verbindung zwischen den Verschlussteilen 4, 5 geschaffen ist.

Der Verriegelungsmechanismus 52 weist ein Hebelelement 520 auf, das an einer Gelenkachse 526 mit dem Verriegelungselement 527 gelenkig verbunden ist. Über eine Gelenkachse 522 ist das Hebelelement 520 gelenkig mit einem Verbindungshebel 521 verbunden, der wiederum über eine Gelenkachse 523 gelenkig an das Verriegelungselement 524 gekoppelt ist. Die Gelenkachse 523 ist über ein Federelement 525 federelastisch gegenüber dem Verbindungshebel 521 abgestützt derart, dass die Gelenkachse 523 elastisch in einem Langloch des Verbindungshebels 521 verschiebbar ist und das Verriegelungselement 524 somit elastisch gegenüber dem Verbindungshebel 521 abgestützt ist.

In der gesperrten Stellung des Verriegelungsmechanismus 52 gemäß Fig. 12 stehen die Verriegelungselemente 524, 527 mit den Sperrstücken 41A, 41B in Eingriff, sodass eine Verbindung zwischen den Verschlussteile 4, 5 hergestellt ist. Fig. 12 zeigt die Verschlussvorrichtung 2 mit an dem Verschlussteil 5 angeordnetem Gegenstand 3. Fig. 13 zeigt die Verschlussvorrichtung 2 bei von dem Verschlussteil 5 gelöstem Gegenstand 3.

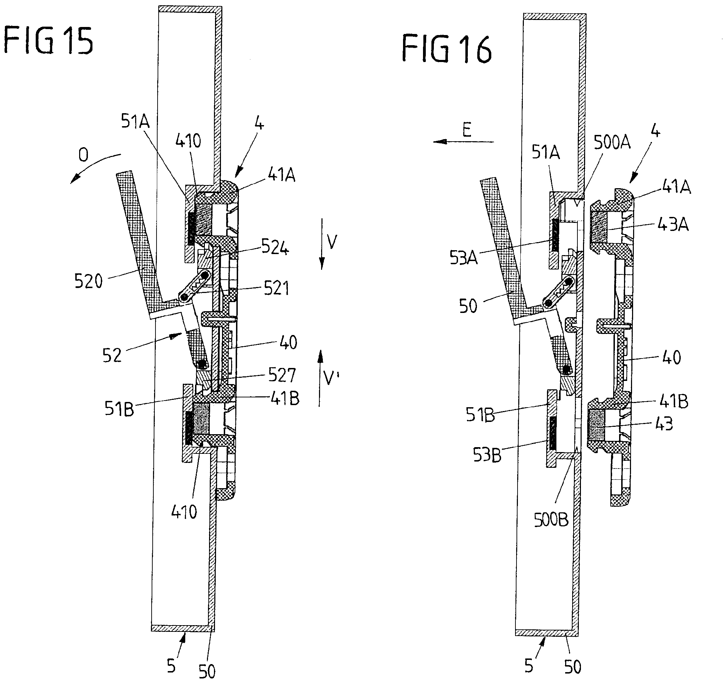

Zum Trennen der Verschlussteile 4, 5 voneinander kann das Hebelelement 520 in eine Öffnungsrichtung O verschwenkt werden, wodurch die Verriegelungselemente 524, 527 jeweils in eine zugeordnete Verstellrichtung V, V' außer Eingriff von den Sperrstücken 41A, 41B gezogen werden, wie dies im Übergang von Fig. 14 hin zu Fig. 15 ersichtlich ist. Um ein gleichzeitiges Verstellen der Verriegelungselemente 524, 527 zu gewährleisten, kann dabei eine geeignete Führung für das Hebelelement 520, den Verbindungshebel 521 und/oder die Verriegelungselemente 524, 527 an dem zweiten Verschlussteil 5 bereitgestellt sein, beispielsweise indem die Gelenkachse 522 zwischen dem Hebelelement 520 und dem Verbindungshebel 521 senkrecht zum Verschlussteil 5, also entlang der Schließrichtung X, zu dem Verschlussteil 5 geführt und somit quer zur Schließrichtung X in Position gehalten wird.

Sind die Verriegelungselemente 524, 527 außer Eingriff von den Sperrstücken 41A, 41B gebracht worden, können die Sperrstücke 41A, 41B aus den Sperraufnahmen 51A, 51B, entlang einer Trennrichtung E entnommen werden, wie dies aus Fig. 16 ersichtlich ist. Die Verschlussteile 4, 5 können somit voneinander getrennt werden.

Der der Erfindung zugrunde liegende Gedanke ist nicht auf die vorangehend geschilderten Ausführungsbeispiele beschränkt, sondern lässt sich auch in anderer Weise verwirklichen.

Bei den oben beschriebenen Ausführungsbeispielen ist ein Betätigungsmechanismus des Verriegelungsmechanismus durch einen Kniehebel verwirklicht. Dies ist jedoch in keinster Weise beschränkend. Beispielsweise kann ein solcher Betätigungsmechanismus auch mit einem Exzenter, mit einer Schraube oder mit einem Keil ausgebildet sein.

Wünschenswert ist hierbei, eine Selbsthemmung in dem Betätigungsmechanismus bereitzustellen, die bewirkt, dass eine Belastung an einem oder an beiden Verriegelungselementen nicht zu einem selbsttätigen Entsperren des Verriegelungsmechanismus führen kann. Auch dies ist jedoch nicht unbedingt zwingend, sondern stattdessen kann beispielsweise auch eine Arretierung auf sonstige Weise an einer Komponente des Verriegelungsmechanismus geschaffen werden.

Eine Verschlussvorrichtung der beschriebenen Art ist zum Verbinden beliebiger Baugruppen miteinander einsetzbar. Vorteilhaft kann eine Verschlussvorrichtung der beschriebenen Art beispielsweise zum Verbinden von Gegenständen mit einem Fahrrad eingesetzt werden, wobei das erste Verschlussteil vorteilhaft fest und dauerhaft mit dem Fahrrad verbunden sein kann und über ein zweites Verschlussteil unterschiedliche Gegenstände, zum Beispiel eine Trinkflasche oder ein Fahrradschloss, mit dem Fahrrad verbunden werden können.

### Bezugszeichenliste

- 1: Erste Baugruppe (Fahrzeug)
- 10: Rahmen
- 100: Rahmenstange
- 2: Verschlussvorrichtung
- 3: Zweite Baugruppe (Behälter)
- 4: Verschlussteil
- 40: Körper
- 400A, 400B: Aufnahmeöffnung
- 41A, 41B: Sperrstück
- 410: Sperrabschnitt (Hinterschnitt)
- 411: Schaft
- 42: Zapfen
- 43A, 43B: Magnetelement
- 5: Verschlussteil
- 50: Körper
- 500A, 500B: Verschlussöffnung
- 501: Öffnung
- 51A, 51B: Sperraufnahme
- 510: Wandung
- 511: Sperrabschnitt (Hinterschnitt)
- 52: Verriegelungsmechanismus
- 520: Hebelelement
- 521: Verbindungshebel
- 522,523: Gelenkachse
- 524: Verriegelungselement
- 525: Federelement
- 526: Gelenkachse
- 527: Verriegelungselement
- 53A, 53B: Magnetelement
- 54: Federelement
- 540: Lagerabschnitt
- 55: Führungselement
- E: Trennrichtung
- L: Löserichtung
- O: Öffnungsrichtung
- V, V': Verstellrichtung
- X: Schließrichtung

## Patentansprüche

1. Verschlussvorrichtung (2) zum Verbinden von zwei Baugruppen miteinander, mit
- einem an einer der Baugruppen anzuordnenden, ersten Verschlussteil (4), das ein Sperrstück (41A, 41B) mit einem ersten Sperrabschnitt (410) und ein erstes Magnetelement (43A, 43B) aufweist, und
- einem an der anderen der Baugruppen zu befestigenden, zweiten Verschlussteil (5), das eine Sperraufnahme (51A, 51B) mit einem zweiten Sperrabschnitt (511) und ein zweites Magnetelement (43A, 43B) aufweist, wobei das erste Verschlussteil (4) und das zweite Verschlussteil (5) entlang einer Schließrichtung (X) aneinander ansetzbar und in einer Schließstellung formschlüssig entgegen der Schließrichtung (X) miteinander verbunden sind, indem das Sperrstück (41A, 41B) des ersten Verschlussteils (4) in der Sperraufnahme (51A, 51B) des zweiten Verschlussteils (5) aufgenommen ist und der erste Sperrabschnitt (410) des Sperrstücks (41A, 41B) formschlüssig mit dem zweiten Sperrabschnitt (511) der Sperraufnahme (51A, 51B) in Eingriff steht, wobei das erste Magnetelement (43A, 43B) und das zweite Magnetelement (53A, 53B) ausgebildet sind, das Ansetzen des ersten Verschlussteils (4) und des zweiten Verschlussteils (5) aneinander magnetisch zu unterstützen,
**gekennzeichnet durch**
einen an dem zweiten Verschlussteil (5) angeordneten Verriegelungsmechanismus (52), der ein Verriegelungselement (524, 527) und einen mit dem Verriegelungselement (524, 527) wirkverbundenen Betätigungsmechanismus aufweist, wobei das Verriegelungselement (524, 527) in der Schließstellung mit dem Sperrstück (41A, 41B) in Wirkverbindung bringbar ist, um den formschlüssigen Eingriff zwischen dem ersten Sperrabschnitt (410) und dem zweiten Sperrabschnitt (511) zu sperren, wobei der Betätigungsmechanismus betätigbar ist, um das Verriegelungselement (524, 527) relativ zu der Sperraufnahme (51A, 51B) zu verstellen, sodass der erste Sperrabschnitt (410) und der zweite Sperrabschnitt (511) voneinander lösbar sind.

2. Verschlussvorrichtung (2) nach Anspruch 1, **dadurch gekennzeichnet, dass** der erste Sperrabschnitt (410) starr an dem Sperrstück (41A, 41B) und der zweite Sperrabschnitt (511) starr an der Sperraufnahme (51A, 51B) geformt ist.

3. Verschlussvorrichtung (2) nach Anspruch 1 oder 2, **dadurch gekennzeichnet, dass** das Verriegelungselement (524, 527) in einer quer zur Schließrichtung (X) erstreckten Ebene an dem zweiten Verschlussteil (5) verstellbar ist.

4. Verschlussvorrichtung (2) nach einem der Ansprüche 1 bis 3, **dadurch gekennzeichnet, dass** das Verriegelungselement (524, 527) quer zur Schließrichtung (X) linear verschiebbar an dem zweiten Verschlussteil (5) geführt oder zu dem zweiten Verschlussteil (5) um die Schließrichtung (X) verdrehbar ist.

5. Verschlussvorrichtung (2) nach einem der vorangehenden Ansprüche, **dadurch gekennzeichnet, dass** der Betätigungsmechanismus ein Federelement (525, 54) aufweist, das ausgebildet ist, das Verriegelungselement (524, 527) in der Schließstellung elastisch gegenüber dem Sperrstück (41A, 41B) vorzuspannen.

6. Verschlussvorrichtung (2) nach einem der vorangehenden Ansprüche, **dadurch gekennzeichnet, dass** der Betätigungsmechanismus ein Hebelelement (520) aufweist, das zu dem zweiten Verschlussteil (5) verschwenkbar ist, um das Verriegelungselement (524, 527) relativ zu der Sperraufnahme (51A, 51B) zu verstellen.

7. Verschlussvorrichtung (2) nach Anspruch 6, **dadurch gekennzeichnet, dass** das Hebelelement (520) schwenkbar an einem mit dem zweiten Verschlussteil (5) verbundenen Federelement (54) gelagert ist.

8. Verschlussvorrichtung (2) nach Anspruch 6 oder 7, **dadurch gekennzeichnet, dass** das Hebelelement (520) durch Wechselwirkung mit dem ersten Magnetelement (43A, 43B) und/oder dem zweiten Magnetelement (53A, 53B) magnetisch in einer der Schließstellung zugeordneten Hebelstellung gehalten wird, wenn sich die Verschlussvorrichtung (2) in der Schließstellung befindet.

9. Verschlussvorrichtung (2) nach einem der Ansprüche 6 bis 8, **dadurch gekennzeichnet, dass** der Betätigungsmechanismus einen Verbindungshebel (521) aufweist, der an einer ersten Gelenkachse (522) gelenkig mit dem Hebelelement (520) und an einer zweiten Gelenkachse (523) gelenkig mit dem Verriegelungselement (524, 527) verbunden ist.

10. Verschlussvorrichtung (2) nach einem der Ansprüche 6 bis 9, **dadurch gekennzeichnet, dass** das zweite Verschlussteil (5) lösbar mit einer zugeordneten Baugruppe (3) verbindbar ist, wobei in einer mit der Baugruppe (3) verbundenen Stellung das Hebelelement (520) durch Wechselwirkung mit der Baugruppe (3) in einer der Schließstellung zugeordneten Hebelstellung gehalten wird.

11. Verschlussvorrichtung (2) nach einem der vorangehenden Ansprüche, **dadurch gekennzeichnet, dass** das Verriegelungselement (524, 527) einen mit dem Sperrabschnitt (410) des Sperrstücks (41A, 41B) in Eingriff bringbaren Hinterschnitt aufweist.

12. Verschlussvorrichtung (2) nach einem der vorangehenden Ansprüche, **dadurch gekennzeichnet, dass** das erste Verschlussteil (4) zumindest zwei Sperrstücke (41A, 41B) mit jeweils einem ersten Sperrabschnitt (410) und das zweite Verschlussteil (5) zumindest zwei Sperraufnahmen (51A, 51B) mit jeweils einem zweiten Sperrabschnitt (511) aufweist, wobei in der Schließstellung die Sperrstücke (41A, 41B) des ersten Verschlussteils (4) in den Sperraufnahmen (51A, 51B) des zweiten Verschlussteils (5) aufgenommen sind und die ersten Sperrabschnitte (410) der Sperrstücke (41A, 41B) formschlüssig mit den zweiten Sperrabschnitten (511) der Sperraufnahmen (51A, 51B) in Eingriff stehen.

13. Verschlussvorrichtung (2) nach Anspruch 12, **dadurch gekennzeichnet, dass** der Verriegelungsmechanismus (52) nur ein Verriegelungselement (524, 527) aufweist, das in der Schließstellung mit einem der Sperrstücke (41A, 41B) in Anlage bringbar ist, nicht aber mit dem anderen der Sperrstücke (41A, 41B).

14. Fahrrad (1), mit einer Verschlussvorrichtung (2) nach einem der vorangehenden Ansprüche zum Befestigen einer Baugruppe (3) an einem Rahmen (10) des Fahrrads (1).

## Claims

1. A closure device (2) for connecting two assemblies to one another, comprising
- a first closure part (4) to be arranged on one of the assemblies and comprising a locking piece (41A, 41B) with a first locking section (410) and a first magnetic element (43A, 43B), and
- a second closure part (5) to be fastened to the other of the assemblies and having a locking receptacle (51A, 51B) with a second locking section (511) and a second magnetic element (43A, 43B), wherein the first closure part (4) and the second closure part (5) are attachable to one another in a closing direction (X) and are connected to one another in a closed position by positive locking counter to the closing direction (X), by the locking piece (41A, 41B) of the first closure part (4) being received in the locking receptacle (51A, 51B) of the second closure part (5) and the first locking section (410) of the locking piece (41A, 41B) being in a positively locked engagement with the second locking section (511) of the locking receptacle (51A, 51B), wherein the first magnetic element (43A, 43B) and the second magnetic element (53A, 53B) are configured to assist magnetically the attachment of the first closure part (4) and the second closure part (5) to one another,
**characterized by**
an arresting mechanism (52) arranged on the second closure part (5) and having an arresting element (524, 527) and an actuating mechanism operatively connected to the arresting element (524, 527), wherein the arresting element (524, 527) can be brought into operative connection with the locking piece (41A, 41B) in the closed position, in order to lock the positively locked engagement between the first locking section (410) and the second locking section (511), wherein the actuating mechanism may be actuated in order to adjust the arresting element (524, 527) relative to the locking receptacle (51A, 51B) so that the first locking section (410) and the second locking section (511) are releasable from one another.

2. The closure device (2) as claimed in claim 1, **characterized in that** the first locking section (410) is rigidly formed on the locking piece (41A, 41B) and the second locking section (511) is rigidly formed on the locking receptacle (51A, 51B).

3. The closure device (2) as claimed in claim 1 or 2, **characterized in that** the arresting element (524, 527) is adjustable on the second closure part (5) in a plane extending transversely to the closing direction (X).

4. The closure device (2) as claimed in one of claims 1 to 3, **characterized in that** the arresting element (524, 527) is guided in a linearly displaceable manner transversely to the closing direction (X) on the second closure part (5) or is rotatable relative to the second closure part (5) about the closing direction (X).

5. The closure device (2) as claimed in one of the preceding claims, **characterized in that** the actuating mechanism has a spring element (525, 54) which is configured to pretension the arresting element (524, 527) in the closed position in a resilient manner relative to the locking piece (41A, 41B).

6. The closure device (2) as claimed in one of the preceding claims, **characterized in that** the actuating mechanism has a lever element (520) which is pivotable relative to the second closure part (5) in order to adjust the arresting element (524, 527) relative to the locking receptacle (51A, 51B).

7. The closure device (2) as claimed in claim 6, **characterized in that** the lever element (520) is pivotably mounted on a spring element (54) connected to the second closure part (5).

8. The closure device (2) as claimed in claim 6 or 7, **characterized in that** by interaction with the first magnetic element (43A, 43B) and/or the second magnetic element (53A, 53B) the lever element (520) is held magnetically in a lever position assigned to the closed position when the closure device (2) is in the closed position.

9. The closure device (2) as claimed in one of claims 6 to 8, **characterized in that** the actuating mechanism has a connecting lever (521) which is connected at a first joint axis (522) in an articulated manner to the lever element (520) and at a second joint axis (523) in an articulated manner to the arresting element (524, 527).

10. The closure device (2) as claimed in one of claims 6 to 9, **characterized in that** the second closure part (5) is releasably connectable to an assigned assembly (3), wherein in a position connected to the assembly (3) the lever element (520) is held by the interaction with the assembly (3) in a lever position assigned to the closed position.

11. The closure device (2) as claimed in one of the preceding claims, **characterized in that** the arresting element (524, 527) has an undercut which may be brought into engagement with the locking section (410) of the locking piece (41A, 41B).

12. The closure device (2) as claimed in one of the preceding claims, **characterized in that** the first closure part (4) has at least two locking pieces (41A, 41B) with in each case a first locking section (410) and the second closure part (5) has at least two locking receptacles (51A, 51B) with in each case a second locking section (511), wherein in the closed position the locking pieces (41A, 41B) of the first closure part (4) are received in the locking receptacles (51A, 51B) of the second closure part (5) and the first locking sections (410) of the locking pieces (41A, 41B) are in a positively locked engagement with the second locking sections (511) of the locking receptacles (51A, 51B).

13. The closure device (2) as claimed in claim 12, **characterized in that** the arresting mechanism (52) comprises only one arresting element (524, 527) which is able to be brought into abutment with one of the locking pieces (41A, 41B) in the closed position but not with the other of the locking pieces (41A, 41B).

14. A bicycle (1) comprising a closure device (2) as claimed in one of the preceding claims, for fastening an assembly (3) to a frame (10) of the bicycle (1).

## Revendications

1. Dispositif de fermeture (2) pour relier deux modules l'un à l'autre, avec
- une première partie de fermeture (4) à disposer sur l'un des modules, qui présente une pièce de blocage (41A, 41B) avec une première section de blocage (410) et un premier élément magnétique (43A, 43B), et
- une seconde partie de fermeture (5) à fixer sur l'autre des modules, qui présente un logement de blocage (51A, 51B) avec une deuxième section de blocage (511) et un second élément magnétique (43A, 43B), dans lequel la première partie de fermeture (4) et la seconde partie de fermeture (5) peuvent être placées l'une contre l'autre le long d'une direction de fermeture (X) et sont reliées l'une à l'autre par complémentarité de forme dans le sens opposé à la direction de fermeture (X) dans une position de fermeture en ce que la pièce de blocage (41A, 41B) de la première partie de fermeture (4) est logée dans le logement de blocage (51A, 51B) de la seconde partie de fermeture (5) et la première section de blocage (410) de la pièce de blocage (41A, 41 B) est en prise par complémentarité de forme avec la deuxième section de blocage (511) du logement de blocage (51A, 51B), dans lequel le premier élément magnétique (43A, 43B) et le second élément magnétique (53A, 53B) sont réalisés pour soutenir le placement de la première partie de fermeture (4) et de la seconde partie de fermeture (5) l'une contre l'autre de manière magnétique,
**caractérisé par**
un mécanisme de verrouillage (52) disposé sur la seconde partie de fermeture (5), qui présente un élément de verrouillage (524, 527) et un mécanisme d'actionnement coopérant avec l'élément de verrouillage (524, 527), dans lequel l'élément de verrouillage (524, 527) peut être amené à coopérer avec la pièce de blocage (41A, 41B) dans la position de fermeture pour bloquer la prise par complémentarité de forme entre la première section de blocage (410) et la deuxième section de blocage (511), dans lequel le mécanisme d'actionnement peut être actionné pour ajuster l'élément de verrouillage (524, 527) par rapport au logement de blocage (51A, 51B) si bien que la première section de blocage (410) et la deuxième section de blocage (511) peuvent être détachées l'une de l'autre.

2. Dispositif de fermeture (2) selon la revendication 1, **caractérisé en ce que** la première section de blocage (410) est formée de manière rigide sur la pièce de blocage (41A, 41B) et la deuxième section de blocage (511) est formée de manière rigide sur le logement de blocage (51A, 51B).

3. Dispositif de fermeture (2) selon la revendication 1 ou 2, **caractérisé en ce que** l'élément de verrouillage (524, 527) peut être ajusté sur la seconde partie de fermeture (5) dans un plan s'étendant de manière transversale par rapport à la direction de fermeture (X).

4. Dispositif de fermeture (2) selon l'une quelconque des revendications 1 à 3, **caractérisé en ce que** l'élément de verrouillage (524, 527) est guidé sur la seconde partie de fermeture (5) de manière à pouvoir coulisser linéairement de manière transversale par rapport à la direction de fermeture (X) ou peut être tourné autour de la direction de fermeture (X) par rapport à la seconde partie de fermeture (5).

5. Dispositif de fermeture (2) selon l'une quelconque des revendications précédentes, **caractérisé en ce que** le mécanisme d'actionnement présente un élément de ressort (524, 54) qui est réalisé pour précontraindre élastiquement à l'encontre de la pièce de blocage (41A, 41B) l'élément de verrouillage (524, 527) dans la position de fermeture.

6. Dispositif de fermeture (2) selon l'une quelconque des revendications précédentes, **caractérisé en ce que** le mécanisme d'actionnement présente un élément de levier (520) qui peut être pivoté par rapport à la seconde partie de fermeture (5) pour ajuster l'élément de verrouillage (524, 527) par rapport au logement de blocage (51A, 51B).

7. Dispositif de fermeture (2) selon la revendication 6, **caractérisé en ce que** l'élément de levier (520) est monté de manière à pouvoir pivoter sur un élément de ressort (54) relié à la seconde partie de fermeture (5).

8. Dispositif de fermeture (2) selon la revendication 6 ou 7, **caractérisé en ce que** l'élément de levier (520) est maintenu magnétiquement dans une position de levier associée à la position de fermeture par interaction avec le premier élément magnétique (43A, 43B) et/ou le deuxième élément magnétique (53A, 53B) quand le dispositif de fermeture (2) se trouve dans la position de fermeture.

9. Dispositif de fermeture (2) selon l'une quelconque des revendications 6 à 8, **caractérisé en ce que** le mécanisme d'actionnement présente un levier de liaison (521), qui est relié de manière articulée à l'élément de levier (520) sur un premier axe d'articulation (522) et de manière articulée à l'élément de verrouillage (524, 527) sur un deuxième axe d'articulation (523).

10. Dispositif de fermeture (2) selon l'une quelconque des revendications 6 à 9, **caractérisé en ce que** la seconde partie de fermeture (5) peut être reliée de manière amovible à un module (3) associé, dans lequel l'élément de levier (520) est maintenu dans une position de levier associée à la position de fermeture par interaction avec le module (3) dans une position reliée au module (3).

11. Dispositif de fermeture (2) selon l'une quelconque des revendications précédentes, **caractérisé en ce que** l'élément de verrouillage (524, 527) présente une section arrière pouvant être amenée en prise avec la section de blocage (410) de la pièce de blocage (41A, 41B).

12. Dispositif de fermeture (2) selon l'une quelconque des revendications précédentes, **caractérisé en ce que** la première partie de fermeture (4) présente au moins deux pièces de blocage (41A, 41 B) avec respectivement une première section de blocage (410) et la seconde partie de fermeture (5) présente au moins deux logements de blocage (51A, 51B) avec respectivement une deuxième section de blocage (511), dans lequel les pièces de blocage (41A, 41B) de la première partie de fermeture (4) sont logées dans la position de fermeture dans les logements de blocage (51A, 51B) de la seconde partie de fermeture (5) et les premières sections de blocage (410) des pièces de blocage (41A, 41B) sont en prise par complémentarité de forme avec les deuxièmes sections de blocage (511) des logements de blocage (51A, 51B).

13. Dispositif de fermeture (2) selon la revendication 12, **caractérisé en ce que** le mécanisme de verrouillage (52) présente seulement un élément de verrouillage (524, 527), qui peut être amené en appui dans la position de fermeture avec une des pièces de blocage (41A, 41 B), toutefois pas avec l'autre des pièces de blocage (41A, 41 B).

14. Bicyclette (1) avec un dispositif de fermeture (2) selon l'une quelconque des revendications précédentes pour fixer un module (3) sur un cadre (10) de la bicyclette (1).
